# EUROPEAN PATENT APPLICATION

(11) **EP 3 450 246 A1**
(43) Date of publication of application: **06.03.2019**
(21) Application number: 18182756.9
(22) Date of filing: 10.07.2018
(51) Int. Cl.: B60N 3/10

(54) **DEPLOYABLE CUP HOLDER**

(30) Priority: 04.09.2017 GB 201714147
(71) Applicant: Ford Global Technologies, LLC, Dearborn, MI 48126 (US)
(72) Inventor: CHOI, Minwoo, London, Middlesex EC2A 3EQ (GB); LECK, Matthew, Ruislip, Middlesex HA4 8NQ (GB); HOGGARTH, Marcus, St. Albans, Hertfordshire AL1 4EP (GB)
(74) Representative: Haseltine Lake LLP

(57) **Abstract**

A deployable cup holder comprising:
a collapsible side structure extending between a top and bottom of the cup holder and around a perimeter of the cup holder, the side structure being collapsible such that: in a deployed configuration the top and bottom of the cup holder are spaced apart in an axial direction with the cup-holder being capable of holding a liquid containing receptacle; and in a collapsed configuration the top and bottom of the cup holder are adjacent to each other; and
a restoring means configured to urge the collapsible side structure into the collapsed configuration.

## Description

### Technical Field

This disclosure relates generally to a deployable cup holder and particularly, although not exclusively, relates to a deployable cup holder that is collapsible so as to provide a flat surface on a table top.

### Background

It is known to provide stowable tables that move between a stowed position and a deployed position in which the table may be used. Such tables may also comprise a cup holder in the table for receiving a cup or similar receptacle. The cup holder may however restrict and complicate movement of the table from the deployed position to the stowed position.

### Statements of Invention

According to an aspect of the present disclosure, there is provided a deployable cup holder comprising:
a collapsible side structure extending between a top and bottom of the cup holder and around a perimeter of the cup holder, the side structure being collapsible such that: in a deployed configuration the top and bottom of the cup holder are spaced apart in an axial direction with the cup-holder being capable of holding a liquid containing receptacle; and in a collapsed configuration the top and bottom of the cup holder are adjacent to each other; and
a restoring means configured to urge the collapsible side structure into the collapsed configuration.

The cup holder may present a substantially flat upper surface when in the collapsed configuration.

The collapsible side structure may be partially collapsible. For example, the degree (e.g. amount) of collapse may vary around the perimeter of the cup holder. The cup holder bottom may be tiltable relative to the top.

The collapsible side structure may comprise a plurality of flexible portions extending between the top and bottom of the cup holder. The flexible portions may be arcuate. The arcuate portions may extend substantially circumferentially in the collapsed configuration, e.g. without a substantial axial component. The arcuate portions may extend at least axially, e.g. circumferentially and axially, in the deployed configuration.

The arcuate portions may form a plurality of rings extending about the perimeter of the cup holder. Neighbouring rings may be successively coupled to one another. Neighbouring rings may be coupled to each other with a plurality of discrete couplings distributed about the neighbouring rings. The couplings between successive pairs of neighbouring rings may be angularly offset from one another.

The arcuate portions may flex (e.g. bend) between the collapsed and deployed configurations. In particular, the rings may flex so that when the cup holder is in the deployed configuration, the couplings between successive pairs of neighbouring rings may be spaced apart in the axial direction.

By way of example, the collapsible side structure may comprise a first ring coupled to a top edge of the cup holder at a plurality of first coupling locations distributed about the perimeter of the first ring. The collapsible side structure may further comprise a second ring coupled to the first ring at a plurality of second coupling locations distributed about the perimeter of the second ring. The second coupling locations may be angularly offset from the first coupling locations, e.g. angularly offset about the axial direction. The collapsible side structure may further comprise a third ring. The second and third rings may be coupled to one another at a plurality of third coupling locations distributed about the perimeter of the third ring. The third coupling locations may be angularly offset from the second coupling locations.

Neighbouring rings may be coupled to one another at discrete locations equiangularly distributed about the perimeter of the rings. For example, two, three or four couplings may be provided between neighbouring pairs of rings and the couplings may be 180, 120 or 90 degrees apart respectively. Other numbers of couplings between neighbouring rings are also contemplated.

Neighbouring rings may be similarly sized such that neighbouring rings may be provided one on top of the other in the collapsed configuration. Alternatively, successive rings may reduce in size from the top to the bottom. For example, neighbouring rings may be provided in a common plane (e.g. alongside one another) in the collapsed configuration with one ring being radially inside another.

The deployable cup holder may further comprise a base. The base may be coupled to one or more of the arcuate portions. The base may be coupled to a last ring of the plurality of rings. For example, the last ring and base may be coupled at last coupling locations. The last coupling locations may be angularly offset from coupling locations between a penultimate ring and the last ring.

The arcuate portions may be distributed about the perimeter of the cup holder. Each of the arcuate portions may extend circumferentially from the top to a base at the bottom of the cup holder so as to form a spiral arrangement. Each of the arcuate portions may extend circumferentially with an additional component in the axial and/or radial direction.

Each arcuate portion, e.g. ring, may comprise an outer layer and an inner layer. The inner layer may be formed from a resilient material, such as a metal, e.g. spring steel. The outer layer may be formed from a flexible material. The flexible material may comprise a fabric, textile or cloth (whether woven or not), and may be made from leather, polymers or any other sheet or thin film material.

The restoring means may comprise one or more magnetic portions configured to urge the collapsible side structure into the collapsed configuration. The magnetic portions may comprise permanent magnets or electromagnets. The magnetic portions may be discrete magnets or magnetized portions of another component, such as the arcuate portions (e.g. rings), in particular the inner layer of the arcuate portions.

One or more of the arcuate portions may comprise a magnetic portion configured to be attracted to a neighbouring arcuate portion. For example, at least one ring may comprise a plurality of magnetic portions distributed about the at least one ring. The magnetic portions may be provided between the couplings connecting the at least one ring with one of the neighbouring rings such that the magnetic portions may be attracted to the one of the neighbouring rings. The magnetic portions of the at least one ring may be provided at the couplings connecting the at least one ring with the other of the neighbouring rings.

The magnetic portions may be arranged so as not to touch in the collapsed configuration. The magnetic portions may be provided on an underside of the arcuate portions, e.g. rings.

The restoring means may be selectively activatable. For example, the restoring means may be activated, e.g. by a controller, when a user requests that the cup holder is collapsed and/or when the receptacle has been removed from the cup holder. A sensor may sense that the receptacle has been removed. By way of example, the restoring means may comprise a selectively activatable electro magnet. The restoring means may also or otherwise comprise a shape memory material, such as a shape memory alloy (e.g. Nitinol) or a shape memory polymer. The shape memory material may be configured to urge the collapsible side structure into the collapsed configuration upon application of an external stimulus, such as an electrical current or heat. Heat may be applied to the shape memory material by an electrical conducting element with a current passing therethrough. The arcuate portions, e.g. rings, may be made from the shape memory material. In particular, the inner layer may be made from the shape memory material.

The deployable cup holder may further comprise a thermal element configured to heat or cool the receptacle. The thermal element may be provided in the base and/or in the arcuate portions (e.g. rings). The inner layer of the arcuate portions may form the thermal element. The thermal element may comprise an electrical conducting element, which upon the application of a current, may provide heat to the receptacle. The thermal element may comprise a cooling, e.g. Peltier, device, which upon application of a current may cool the receptacle.

A table assembly may comprise a table and the above-mentioned deployable cup holder. The deployable cup holder may be coupled to the table. The top of the cup holder may be substantially flush with a top side of the table. When the cup holder is collapsed, the cup holder may present a flat surface, which may be flush with the top side of the table. The bottom of the cup holder may be located between a bottom side of the table and a top side of the table when in the collapsed configuration. The table assembly may be stowable into a receiving structure.

To avoid unnecessary duplication of effort and repetition of text in the specification, certain features are described in relation to only one or several aspects or embodiments of the invention. However, it is to be understood that, where it is technically possible, features described in relation to any aspect or embodiment of the invention may also be used with any other aspect or embodiment of the invention.

### Brief Description of the Drawings

For a better understanding of the present invention, and to show more clearly how it may be carried into effect, reference will now be made, by way of example, to the accompanying drawings, in which:

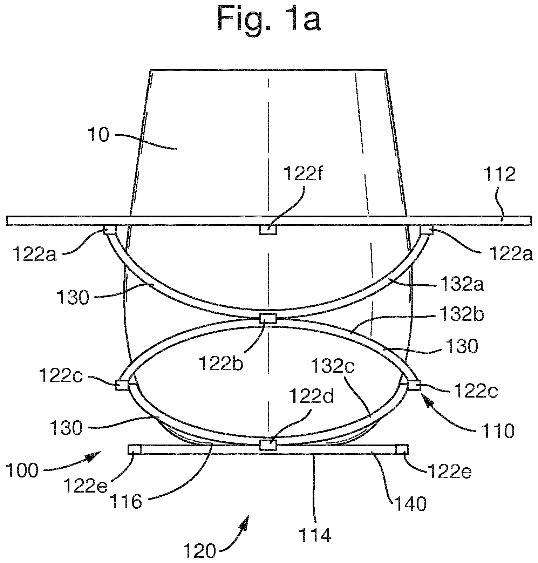

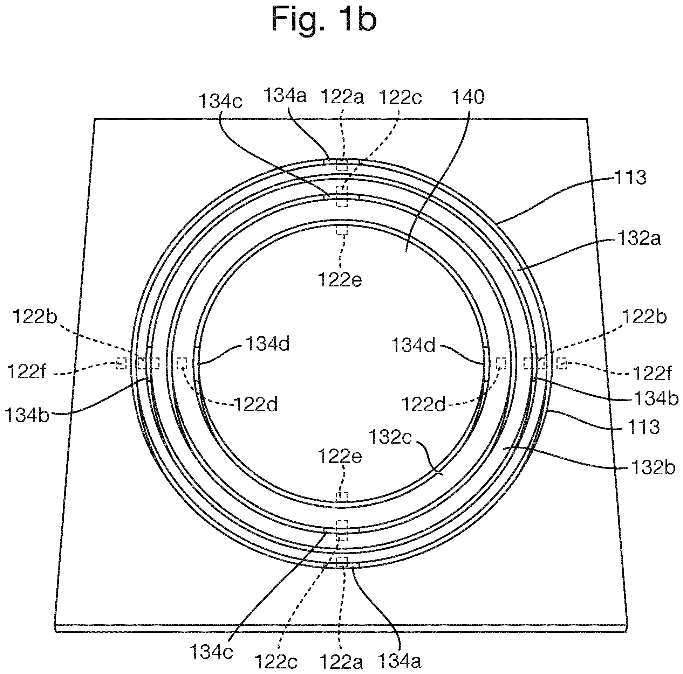

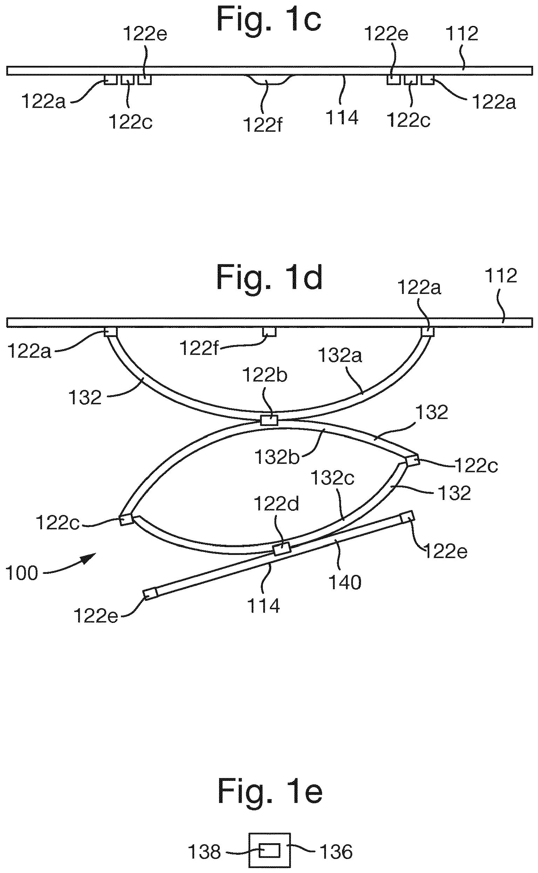

Figures 1a, 1b, 1c 1d and 1e (collectively Figure 1) show a deployable cup holder according to a first arrangement of the present disclosure with Figure 1a being a side view of the cup holder in a deployed configuration; Figure 1b being a top perspective view of the cup holder in a collapsed configuration; Figure 1c being a side view of the cup holder in the collapsed configuration; Figure 1d showing the deployed cup holder in a tilted position; and Figure 1e showing a cross-sectional view of an arcuate portion.

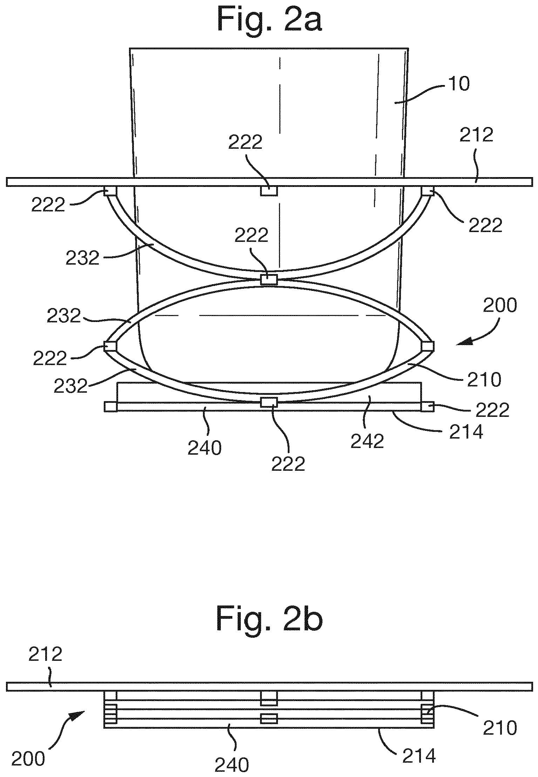

Figures 2a and 2b (collectively Figure 2) show a deployable cup holder according to a second arrangement of the present disclosure with Figure 2a being a side view of the cup holder in a deployed configuration; and Figure 2b being a side view of the cup holder in the collapsed configuration.

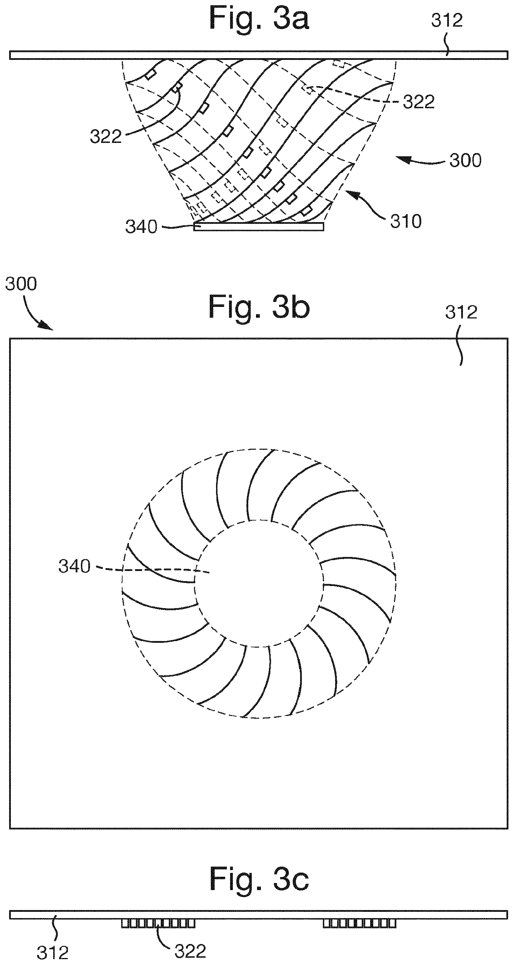

Figures 3a, 3b and 3c (collectively Figure 3) show a deployable cup holder according to a third arrangement of the present disclosure with Figure 3a being a side view of the cup holder in a deployed configuration; Figure 3b being a top view of the cup holder in a collapsed configuration; and Figure 3c being a side view of the cup holder in the collapsed configuration.

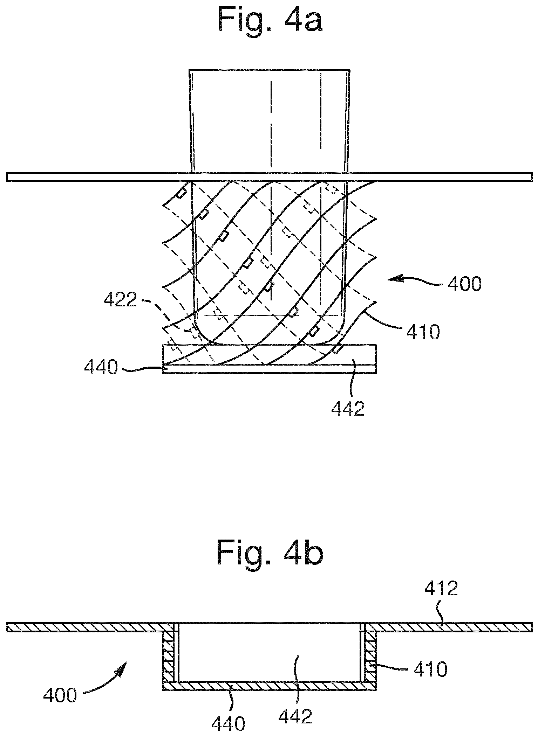

Figures 4a and 4b (collectively Figure 4) show a deployable cup holder according to a fourth arrangement of the present disclosure with Figure 4a being a side view of the cup holder in a deployed configuration; and Figure 4b being a side sectional view of the cup holder in the collapsed configuration.

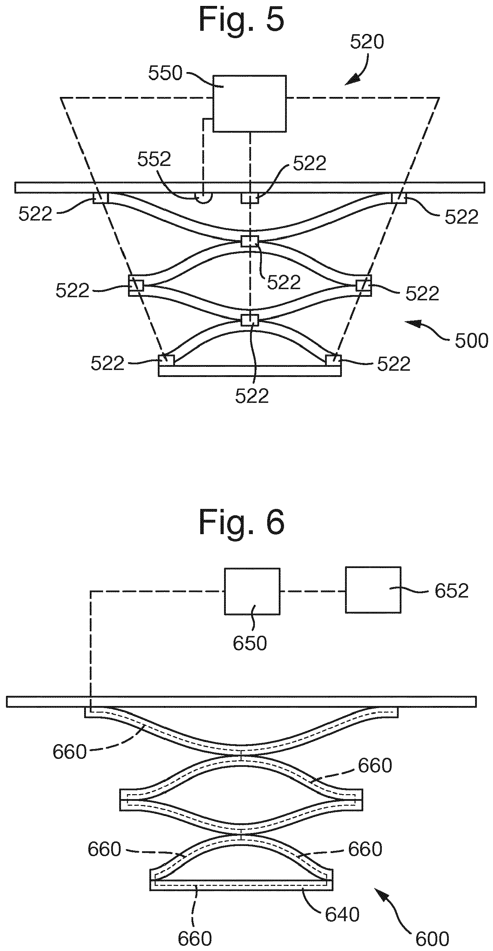

Figure 5 is a schematic side view of a deployable cup holder according to a fifth arrangement of the present disclosure.
Figure 6 is a schematic side view of a deployable cup holder according to a sixth arrangement of the present disclosure.

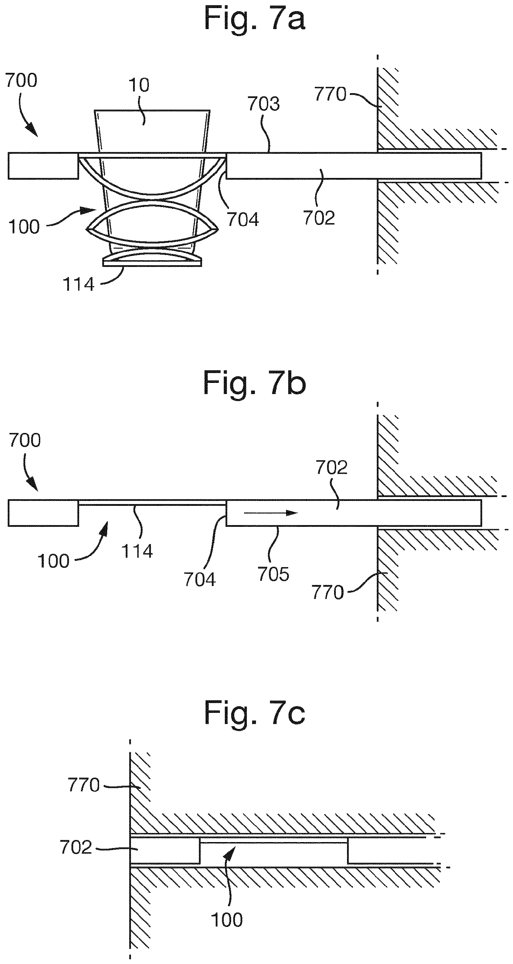

Figure 7a, 7b and 7c (collectively Figure 7) are schematic side views of a table assembly comprising a deployable cup holder according to arrangements of the present disclosure with Figure 7a showing the cup holder in a deployed configuration and a table of the table assembly in an extended position; Figure 7b showing the cup holder in a collapsed configuration; and Figure 7c showing the table in a stowed position.

### Detailed Description

With reference to Figure 1, the present disclosure relates to a deployable cup holder 100 comprising a collapsible side structure 110 and a restoring means 120. As depicted in Figure 1a, the collapsible side structure 110 extends between a top 112 and a bottom 114 of the cup holder 100. The collapsible side structure 110 also extends about a perimeter of the cup holder. In a deployed configuration, as depicted in Figure 1a, the top 112 and bottom 114 are spaced apart in an axial direction. In the deployed configuration, the collapsible side structure 110 forms a side wall and the side structure 110 and bottom 114 together form a recess 116, in which a liquid containing receptacle 10 may reside. The liquid containing receptacle may be a cup, mug, bottle, beaker, can, glass or any other such receptacle. In a collapsed configuration, as depicted in Figures 1b and 1c, the top 112 and bottom 114 of the cup holder 100 are adjacent to each other, and in the particular arrangement shown, the top and bottom may reside in the same plane. As such, the cup holder 100 may present a substantially flat upper surface when in the collapsed configuration.

The restoring means 120 may comprise one or more magnetic portions 122, which are configured to urge the collapsible side structure 110 into the collapsed configuration. The magnetic portions 122 will be described in more detail below.

The collapsible side structure 110 may comprise a plurality of flexible portions, such as arcuate portions 130, which extend between the top 112 and bottom 114 of the cup holder. As depicted in Figure 1b, the arcuate portions 130 may extend substantially circumferentially in the collapsed configuration. By contrast, in the deployed configuration, as depicted in Figure 1a, the arcuate portions 130 may extend circumferentially and axially.

In the particular arrangement shown in Figure 1, the arcuate portions 130 form a plurality of rings extending about the perimeter of the cup holder. As depicted in Figure 1b, the plurality of rings 132 may be concentric with one another. Neighbouring rings 132 may be successively coupled to one another by virtue of a plurality of discrete couplings between the neighbouring rings and distributed about the neighbouring rings. Neighbouring rings 132 may be coupled to one another at discrete locations equiangularly distributed about the perimeter of the rings. In the arrangement depicted in Figure 1, there are two couplings 134 between each pair of neighbouring rings and the couplings 134 are 180° apart. It will be appreciated that other numbers of couplings between neighbouring rings may be used.

The couplings 134 between successive pairs of neighbouring rings 132 may be angularly offset from one another. By way of example, the collapsible side structure 110 may comprise a first ring 132a coupled to a top edge 113 at the top 112 of the cup holder. The first ring 132a may be coupled to the top edge 113 at a pair of first coupling locations 134a, which may be diametrically opposite each other. The collapsible side structure 110 may further comprise a second ring 132b, which is coupled to the first ring 132a at a pair of second coupling locations 134b, which may also be diametrically opposite each other. The second coupling locations 134b are angularly offset from the first coupling locations 134a and in the particular arrangement shown the second coupling locations 134b are offset from the first coupling locations 134a by 90°.

The collapsible side structure 110 may further comprise a third ring 132c provided radially within the second ring 132b. The second and third rings 132b, 132c may be coupled to one another at a pair of third coupling locations 134c, which may also be diametrically opposite one another. The third coupling locations 134c may be angularly offset from the second coupling locations 134b, e.g. by 90°. Accordingly, the first and third coupling locations 134a, 134c may be aligned.

The deployable cup holder 100 may further comprise a base 140. The base 140 may be coupled to the third ring 132c at a pair of fourth coupling locations 134d, which may be diametrically opposite each other. The fourth coupling locations 134d are angularly offset from the third coupling locations 134c, e.g. by 90°. Accordingly, the second and fourth coupling locations 134b, 134d may be aligned. Although the arrangement depicted in Figure 1 has three rings, it is also contemplated that the deployable cup holder may have any other number of rings.

The top 112, rings 132 and base 140 may be formed at least partially from a sheet of material. The sheet of material may be cut to form the rings. The coupling locations 134 may be formed by the absence of a cut at those locations between the top, rings and base.

The rings 132 may flex between the collapsed and deployed configurations. In particular, the rings may flex so that the couplings between successive pairs of neighbouring rings are axially spaced apart when in the deployed configuration. For example, in the case of the first ring 132a, arcuate portions between the first coupling locations 134a and second coupling locations 134b may flex such that the second coupling locations 134b become lower than the first coupling locations 134a. The second and third rings 132b, 132c may flex in a similar manner. As such, the rings 132 may form a lattice structure that extends around the perimeter of the cup holder 100.

As depicted in Figure 1b, the rings 132 may be circular. However, it is also contemplated that the rings may not necessarily be circular in shape and may for example be square or any other shape. As is also depicted in Figure 1b, the radial width of the rings 132 may vary. For example, the radial width of the rings may reduce with radial distance from the center of the cup holder.

Successive rings may reduce in radius from the top edge 113 to the base 140. For example, the first ring 132a may reside in a circular opening in the top 112 and the second ring 132b may reside radially within the first ring 132a. This arrangement may repeat itself for the remaining rings. As a result, the rings may reside in a common plane in the collapsed configuration and may thus present a flush top surface. This arrangement is depicted in Figure 1c. The concentric rings also allows the cup holder 100 to hold a receptacle 10 with a curved bottom when deployed.

The collapsible side structure 110 may extend by varying amounts around the perimeter of the cup holder 100. Accordingly, the base 140 may tilt relative to the top surface 112 of the cup holder, as depicted in Figure 1d. The base 140 may tilt by virtue of the arcuate portions forming the rings 132 flexing to a greater or lesser extent at different circumferential positions around the cup holder. In this way, the collapsible side structure 110 may form a gimbal that may allow the base 140 to remain substantially horizontal in the event that the top 112 of the cup holder is tilted.

With reference to Figure 1e, the arcuate portions may comprise an outer layer 136 and an inner layer 138. The inner layer 138 may be formed from the sheet material mentioned above. The outer layer 136 may encapsulate the inner layer 138. Alternatively, the outer layer 136 may extend only partially around the inner layer 138, e.g. over one or more surfaces of the inner layer 138. The inner layer 138 may be formed from a resilient material, such as a metal. In particular, the inner layer 138 may be formed from spring steel, although other metals and resilient materials are also contemplated. The resilience of the inner layer 138 may assist the collapsible side structure 110 in returning to the collapsed configuration depicted in Figures 1b and 1c. The outer layer 136 may be formed from a flexible material, such as a fabric, textile, cloth (whether woven or not) or any other aesthetic covering. For example, the outer layer may be made from leather (whether derived from an animal or man-made), polymers or any other sheet or thin film material. The outer layer 136 may be formed from the same material that extends over a top surface of the cup holder 100.

As mentioned above, the restoring means 120 may comprise one or more magnetic portions 122 that are configured to urge the collapsible side structure 110 into the collapsed configuration. One or more of the arcuate portions may be provided with a magnetic portion, which is configured to be attracted to a neighbouring arcuate portion. The magnetic portion may be attracted to the neighbouring arcuate portion by virtue of the material properties of the neighbouring arcuate portion or the neighbouring arcuate portion may also be provided with a corresponding magnetic portion.

In the particular arrangement shown in Figure 1, a first pair of magnetic portions 122a may be provided at the first coupling locations 134a; a second pair of magnetic portions 122b may be provided at the second coupling locations 134b; a third pair of magnetic portions 122c may be provided at the third coupling locations 134c; and a fourth pair of magnetic portions 122d may be provided at the fourth coupling locations 134d. A fifth pair of magnetic portions 122e may be provided on the base 140 and may be aligned with the third pair of magnetic portions 122c. A sixth pair of magnetic portions 122f may be provided on an underside of the top 112 and may be aligned with the second pair of magnetic portions 122b. In each case, the magnetic portions making up a magnetic pair may be diametrically opposite one another. The magnetic portions from the first pair of magnetic portions 122a may be attracted to a corresponding magnetic portion of the third pair of magnetic portions 122c. Likewise, the magnetic portions of the second pair of magnetic portions 122b may be attracted to corresponding magnetic portions of the fourth pair of magnetic portions 122d. Likewise, the magnetic portions of the fifth magnetic portions 122e may be attracted to corresponding magnetic portions of the third pair of magnetic portions 122c. Finally, the magnetic portions of the sixth magnetic portions 122f may be attracted to corresponding magnetic portions of the second pair of magnetic portions 122b.

The attractive forces between the corresponding magnetic portions may provide a restoring force that assists in returning the deployable cup holder 100 to the collapsed configuration depicted in Figures 1b and 1c. In particular, the resilience of the arcuate portions may also provide a restoring force to return the collapsible wall structure 110 to the collapsed configuration. The resilient arcuate portions may return the collapsible wall structure to a position at which the restoring force of the magnetic portions begins to dominate. The resilient arcuate portions and magnetic portions may work in tandem and the magnetic portions may conveniently provide an additional restoring force, particularly when the deformation of the arcuate portions has been reduced and the elastic restoring force of the arcuate portions has also been reduced. The magnetic restoring force increases in magnitude as the arcuate portions return to the collapsed configuration, whereas the elastic restoring force reduces. In this way, the magnetic portions may provide an additional and definitive restoring force that returns the cup holder to a complete collapsed configuration. The magnetic portions may therefore assist in preventing any sag in the cup holder and may thus provide a flush surface in the collapsed configuration.

As depicted, the magnetic portions 122 may be provided on an underside of the arcuate portions or rings. In this way, the magnetic portions may not be visible from the top surface. As mentioned above, the magnetic portions may be provided at the coupling locations. The magnetic portions may conveniently form part of the coupling between adjacent rings. For example, a particular magnetic portion may extend radially from one ring to a neighbouring ring and the magnetic portion may provide or form part of the coupling between the two rings. The inner layers of the arcuate portions may extend above the magnetic portion and the outer layers may wrap around the magnetic portion. The magnetic portion may be provided in a sleeve, which is in turn connected to the arcuate portion.

The magnetic portions 122 may be arranged so as not to touch in the collapsed configuration. Preventing the magnetic portions from touching may assist in reducing sudden or jarring movements as the cup holder moves towards the collapsed configuration. The magnetic portions may be prevented from touching by spacing neighbouring magnetic portions apart in the collapsed configuration. For example, the magnetic portions may be provided within sleeves that encompass the magnetic portions and that ensure the neighbouring magnetic portions are spaced apart.

The magnetic portions may comprise permanent magnets, which may be formed from a ferromagnetic material. For example, the magnetic portions may comprise neodymium magnets. Some of the magnetic portions may be replaced with a non magnetised ferromagnetic portion. For example, the fourth and/or sixth magnetic portions 122d, 122f may be replaced by a ferromagnetic material that is attracted to the second magnetic portion 122b. Likewise, the first and/or fifth magnetic portions 122a, 122e may be replaced by a ferromagnetic material that is attracted to the third magnetic portions 122c. Other combinations of magnetic portions and material attracted to the magnetic portions are also contemplated. The magnetic portions may additionally or otherwise comprise electro-magnets, which may be selectively activated. Also, magnetic portions may be discrete magnets or magnetised portions of another component, e.g. the inner layer of the arcuate portions.

As mentioned above, the rings 132 may be concentric with one ring being radially inside another. This allows the rings 132 to reside in the same plane when collapsed and present a flat surface. However, with reference to Figure 2, the rings 232 may be similarly sized such that neighbouring rings are provided one on top of the other in the collapsed configuration. Accordingly, in contrast to the first arrangement depicted in Figure 1, in which the diameter of the collapsible side structure reduces with axial depth, the diameter of the collapsible side structure 210 in the second arrangement may remain substantially constant.

Figure 2b depicts the collapsible cup holder 200 of the second arrangement in the collapsed configuration. As the rings 232 are substantially the same size, the base 240 is not flush with the top surface 212 when in the collapsed configuration. However, a spacer 242 may be provided on the base 240 and the spacer 242 may project above the base 240 such that a top surface of the spacer 242 is flush with the surrounding top surface of the cup holder 200 when in the collapsed configuration.

The deployable cup holder 200 of the second arrangement may otherwise be similar to the cup holder 100 of the first arrangement and features described in relation to the first arrangement may equally apply to the second arrangement. For example, the deployable cup holder 200 may comprise a plurality of magnetic portions 222, which are configured to urge the collapsible side structure 210 into the collapsed configuration.

With reference to Figure 3, the arcuate portions may be distributed about the perimeter of a deployable cup holder 300 according to a third arrangement of the present disclosure. In particular, each of the arcuate portions may extend circumferentially from the top 312 to the base 340 of the cup holder 300. The arcuate portions may also extend radially from the top 312 to the base 340. Accordingly, the arcuate portions may extend in a spiral-type fashion. As depicted in Figure 3b, the arcuate portions may lie in the same plane when the cup holder is in the collapsed configuration. Accordingly, the cup holder 300 according to the third arrangement of the present disclosure presents a flat surface when in the collapsed configuration. The cup holder 300 may otherwise comprise features described above with respect to the first and second arrangements of the present disclosure, which for brevity will not be repeated here. For example, the cup holder 300 according to the third arrangement may comprise magnetic portions 322, which are configured to urge the collapsible side structure 310 into the collapsed configuration. Figure 3c depicts a side view of the cup holder 300 in the collapsed configuration.

With reference to Figure 4, a deployable cup holder 400 according to a fourth arrangement of the present disclosure may be substantially similar to the cup holder 300 according to the third arrangement. However, in contrast to the further arrangement, the arcuate portions of the cup holder 400 may be provided one on top of the other in the collapsed configuration. The collapsible side structure 410 of the fourth arrangement may therefore maintain a constant diameter, in contrast to the diameter of the collapsible side structure 310 of the third arrangement, which may vary.

The arcuate portions of the cup holder according to the fourth arrangement extend circumferentially in the collapsed configuration. The arcuate portions may also extend axially in the collapsed configuration to accommodate a neighbouring arcuate portion, which it may abut. The arcuate portions may thus overlap one another in the collapsed configuration. When deployed, the arcuate portions may increase their axial extension. The circumferential extension may on the other hand reduce.

As the arcuate portions lie one on top of the other in the collapsed configuration, the base 440 of the cup holder 400 may not be flush with the top surface 412 in the collapsed configuration. Therefore a spacer 442 may be provided on the base 440 with a top surface of the spacer 442 being flush with the top surface of the surrounding cup holder when in the collapsed configuration.

The cup holder 400 according to the fourth arrangement may otherwise be similar to the cup holders 100, 200, 300 described above and features described in relation to the aforementioned cup holders may equally apply to the fourth arrangement. For example, the cup holder 400 according to the fourth arrangement may comprise magnetic portions 422 which are configured to urge the collapsible side structure 410 into the collapsed configuration.

Referring now to Figure 5, the restoring means 520 may be selectively activatable. For example, in the fifth arrangement of the present disclosure depicted in Figure 5, a restoring means 520 may be activated by a controller 550 when a user requests that the cup holder is collapsed and/or when the receptacle has been removed from the cup holder 500. The cup holder 500 may correspond to any of the above-mentioned cup holders. A sensor 552 may be operatively coupled to the controller 550. The sensor 552 may sense when the receptacle 10 has been removed from the cup holder 500. The sensor 552 may comprise a proximity sensor, which may be configured to detect the presence of the receptacle 10.

The restoring means 520 may comprise electro-magnets 522 which may be operatively coupled to the controller 550. The controller 550 may send a signal to the electro-magnets 522 to activate the electro-magnets and therefore urge the cup holder 500 into the collapsed configuration. The sensor 552 may be replaced or supplemented with a switch that allows a user to manually activate the restoring means 520.

Instead of or in addition to the electro-magnets 522, the restoring means 520 may comprise a shape memory material, which upon application of an external stimulus may return to a default shape. For example, the arcuate portions may be made from a shape memory material, in particular the inner layer may be made from the shape memory material. The shape memory material may be a shape memory alloy (e.g. Nitinol) or a shape memory polymer. The default shape of the shape memory material may correspond to the arcuate portions in the collapsed configuration. The external stimulus may be an electrical current or heat, which when applied to the shape memory material may urge the arcuate portions to return to the collapsed configuration. The arcuate portions may be electrically coupled to one another such than an electric current may pass through all of the arcuate portions, which may be arranged in series or parallel. The controller 550 may directly or indirectly provide the electrical current to trigger the shape memory material returning to its default position. In the event that the shape memory material is activated by heat, heat may be applied to the shape memory material by an electrical conducting element with a current passing therethrough. The electrical conducting element may be connected to the controller in a similar way, as previously described.

With reference to Figure 6, a deployable cup holder 600 according to a sixth arrangement of the present disclosure may comprise a thermal element 660 configured to heat or cool the receptacle 10. The thermal element 660 may be applied to any of the arrangements described above. The thermal element 660 may be provided in the base 640 and/or in the arcuate portions. The inner layer of the arcuate portions may form the thermal element. For example, in the case of the inner layer being made from metal or any other conducting element, the application of a current to the inner layer may provide heat to the receptacle 10. Accordingly, the inner layers may be electrically connected to one another. The base 640 may also comprise an electrical element which connects to the electrical elements within the arcuate portions. Additionally or alternatively, the thermal element may comprise a cooling device, such as a Peltier device, which upon application of a current may cool the receptacle 10. Again, the cooling device may be provided in the arcuate portions and/or the base 640. The thermal element may be activated by the controller 650 which is operatively connected to the thermal element 660. A user may interact with a user interface 652, such as a switch, which is operatively connected to the controller 650. When the user indicates that cooling or heating of the receptacle is required via the user interface 652, the controller 650 may activate the heating or cooling device respectively.

With reference to Figure 7, any of the above-mentioned deployable cup holders may form part of a table assembly 700. In the particular arrangement shown, the table assembly 700 comprises the deployable cup holder 100 according to the first arrangement of the present disclosure. The table assembly 700 comprises a table 702 which has an opening 704 in which the cup holder 100 may reside. The top 112 of the cup holder may be substantially flush with a top side 703 of the table 702. The table 702 may be stowable in a receiving structure 770. The table 702 may selectively slide into the receiving structure 770.

Figure 7a depicts the table 702 in an extended position relative to the receiving structure 770. The cup holder 100 is also deployed and may receive the receptacle 10. When the receptacle 10 is removed, the cup holder 100 may be collapsed. The bottom 114 of the cup holder 100 may be set back from a bottom side 705 of the table 702. In this way, the collapsed cup holder 100 may not protrude relative to the bottom side 705 of the table 702. As depicted in Figure 7c, the table 702 may then be retracted into the receiving structure 770 without the deployable cup holder 100 inhibiting such movement.

The numbered statements set out below form part of the present disclosure.

Statement 1. A deployable cup holder comprising:
a collapsible side structure extending between a top and bottom of the cup holder and around a perimeter of the cup holder, the side structure being collapsible such that: in a deployed configuration the top and bottom of the cup holder are spaced apart in an axial direction with the cup-holder being capable of holding a liquid containing receptacle; and in a collapsed configuration the top and bottom of the cup holder are adjacent to each other; and
a restoring means configured to urge the collapsible side structure into the collapsed configuration.

Statement 2. The deployable cup holder of statement 1, wherein the cup holder presents a substantially flat upper surface when in the collapsed configuration.

Statement 3. The deployable cup holder of statement 1 or 2, wherein the collapsible side structure is partially collapsible such that the degree of collapse may vary around the perimeter of the cup holder and that the cup holder bottom is tiltable relative to the top.

Statement 4. The deployable cup holder of any of the preceding statements, wherein the collapsible side structure comprises a plurality of arcuate portions extending between the top and bottom of the cup holder, wherein the arcuate portions extend substantially circumferentially in the collapsed configuration and the arcuate portions extend at least axially in the deployed configuration.

Statement 5. The deployable cup holder of statement 4, wherein the arcuate portions form a plurality of rings extending about the perimeter of the cup holder, neighbouring rings being successively coupled to one another.

Statement 6. The deployable cup holder of statement 5, wherein neighbouring rings are coupled to each other with a plurality of discrete couplings distributed about the neighbouring rings.

Statement 7. The deployable cup holder of statement 6, wherein the couplings between successive pairs of neighbouring rings are angularly offset from one another.

Statement 8. The deployable cup holder of statement 7, wherein the rings flex so that when the cup holder is in the deployed configuration, the couplings between successive pairs of neighbouring rings are spaced apart in the axial direction.

Statement 9. The deployable cup holder of any of statements 6 to 8, wherein neighbouring rings are coupled to one another at discrete locations equiangularly distributed about the perimeter of the rings.

Statement 10. The deployable cup holder of any of statements 5 to 9, wherein the deployable cup holder further comprises a base, the base being coupled to a last ring of the plurality of rings.

Statement 11. The deployable cup holder of any of statements 5 to 10, wherein neighbouring rings are similarly sized such that neighbouring rings are provided one on top of the other in the collapsed configuration.

Statement 12. The deployable cup holder of any of statements 5 to 11, wherein successive rings reduce in size from the top to the bottom such that neighbouring rings are provided in a common plane in the collapsed configuration with one ring being radially inside another.

Statement 13. The deployable cup holder of statement 4, wherein the arcuate portions are distributed about the perimeter of the cup holder, each of the arcuate portions extending circumferentially from the top to a base at the bottom of the cup holder so as to form a spiral arrangement.

Statement 14. The deployable cup holder of any of statements 4 to 13, wherein each arcuate portion comprises an outer layer and an inner layer.

Statement 15. The deployable cup holder of statement 14, wherein the inner layer is formed from a resilient material.

Statement 16. The deployable cup holder of statement 14 or 15, wherein the outer layer is formed from a flexible material.

Statement 17. The deployable cup holder of any of the preceding statements, wherein the restoring means comprises one or more magnetic portions configured to urge the collapsible side structure into the collapsed configuration.

Statement 18. The deployable cup holder of statement 17 when dependent on statement 4, wherein one or more of the arcuate portions comprises a magnetic portion configured to be attracted to a neighbouring arcuate portion.

Statement 19. The deployable cup holder of statement 17 or 18 when dependent on statement 5, wherein at least one ring comprises a plurality of magnetic portions distributed about the at least one ring, the magnetic portions being provided between the couplings connecting the at least one ring with one of the neighbouring rings such that the magnets are attracted to the one of the neighbouring rings.

Statement 20. The deployable cup holder of statement 19, wherein the magnetic portions of the at least one ring are provided at the couplings connecting the at least one ring with the other of the neighbouring rings.

Statement 21. The deployable cup holder of any of statements 17 to 20, wherein the magnetic portions are arranged so as not to touch in the collapsed configuration.

Statement 22. The deployable cup holder of any of statements 17 to 21 when dependent on statement 4, wherein the magnetic portions are provided on an underside of the arcuate portions.

Statement 23. The deployable cup holder of any of the preceding statements, wherein the restoring means is selectively activatable.

Statement 24. The deployable cup holder of statement 23, wherein the restoring means comprises a selectively activatable electro magnet.

Statement 25. The deployable cup holder of statement 23 or 24, wherein the restoring means comprises a shape memory material configured to urge the collapsible side structure into the collapsed configuration upon application of an external stimulus.

Statement 26. The deployable cup holder of any of the preceding statements, wherein the deployable cup holder further comprises a thermal element configured to heat or cool the receptacle.

Statement 27. The deployable cup holder of statement 26, wherein the thermal element comprises an electrical conducting element, which upon the application of a current, provides heat to the receptacle.

Statement 28. The deployable cup holder of statement 26 or 27, wherein the thermal element comprises a Peltier device.

Statement 29. A table assembly comprising a table and the deployable cup holder of any of the preceding statements, the deployable cup holder being coupled to the table.

Statement 30. The table assembly of statement 29, wherein the top of the cup holder is substantially flush with a top side of the table.

Statement 31. The table assembly of statement 29 or 30, wherein the bottom of the cup holder is located between a bottom side of the table and a top side of the table when in the collapsed configuration.

Statement 32. The table assembly of any of statements 29 to 31, wherein the table assembly is stowable into a receiving structure.

It will be appreciated by those skilled in the art that although the invention has been described by way of example, with reference to one or more examples, it is not limited to the disclosed examples and alternative examples may be constructed without departing from the scope of the invention as defined by the appended claims.

## Claims

1. A deployable cup holder comprising:
a collapsible side structure extending between a top and bottom of the cup holder and around a perimeter of the cup holder, the side structure being collapsible such that: in a deployed configuration the top and bottom of the cup holder are spaced apart in an axial direction with the cup-holder being capable of holding a liquid containing receptacle; and in a collapsed configuration the top and bottom of the cup holder are adjacent to each other; and
a restoring means configured to urge the collapsible side structure into the collapsed configuration.

2. The deployable cup holder of claim 1, wherein the cup holder presents a substantially flat upper surface when in the collapsed configuration.

3. The deployable cup holder of claim 1 or 2, wherein the collapsible side structure comprises a plurality of arcuate portions extending between the top and bottom of the cup holder, wherein the arcuate portions extend substantially circumferentially in the collapsed configuration and the arcuate portions extend at least axially in the deployed configuration.

4. The deployable cup holder of claim 3, wherein the arcuate portions form a plurality of rings extending about the perimeter of the cup holder, neighbouring rings being successively coupled to one another.

5. The deployable cup holder of claim 4, wherein neighbouring rings are similarly sized such that neighbouring rings are provided one on top of the other in the collapsed configuration.

6. The deployable cup holder of claim 4, wherein successive rings reduce in size from the top to the bottom such that neighbouring rings are provided in a common plane in the collapsed configuration with one ring being radially inside another.

7. The deployable cup holder of claim 3, wherein the arcuate portions are distributed about the perimeter of the cup holder, each of the arcuate portions extending circumferentially from the top to a base at the bottom of the cup holder so as to form a spiral arrangement.

8. The deployable cup holder of any of the preceding claims, wherein the restoring means comprises one or more magnetic portions configured to urge the collapsible side structure into the collapsed configuration.

9. The deployable cup holder of claim 8 when dependent on claim 3, wherein one or more of the arcuate portions comprises a magnetic portion configured to be attracted to a neighbouring arcuate portion.

10. The deployable cup holder of claim 8 or 9 when dependent on claim 4, wherein at least one ring comprises a plurality of magnetic portions distributed about the at least one ring, the magnetic portions being provided between the couplings connecting the at least one ring with one of the neighbouring rings such that the magnets are attracted to the one of the neighbouring rings.

11. The deployable cup holder of claim 10, wherein the magnetic portions of the at least one ring are provided at the couplings connecting the at least one ring with the other of the neighbouring rings.

12. The deployable cup holder of any of claims 8 to 11, wherein the magnetic portions are arranged so as not to touch in the collapsed configuration.

13. The deployable cup holder of any of claims 8 to 12 when dependent on claim 3, wherein the magnetic portions are provided on an underside of the arcuate portions.

14. The deployable cup holder of any of the preceding claims, wherein the restoring means is selectively activatable, e.g. the restoring means comprises a selectively activatable electro magnet.

15. The deployable cup holder of claim 14, wherein the restoring means comprises a shape memory material configured to urge the collapsible side structure into the collapsed configuration upon application of an external stimulus.
